# EUROPEAN PATENT APPLICATION

(11) **EP 4 517 650 A1**
(43) Date of publication of application: **05.03.2025**
(21) Application number: 23397505.1
(22) Date of filing: 29.08.2023
(51) Int. Cl.: G06T 5/50, G06T 5/60

(54) **GENERATING SAR VIDEO**

(71) Applicant: Iceye Oy, 02150 Espoo (FI)
(72) Inventor: Neerot, Martin, 02150 Espoo (FI)
(74) Representative: Moosedog Oy

(57) **Abstract**

A synthetic aperture radar (SAR) video is generated by obtaining a first SAR video of a target location on the Earth's surface, obtaining a second SAR video of the target location, and generating, based on the first and second SAR video, a third SAR video of the target location.

## Description

### Field

The present disclosure relates to image processing and in particular to methods and systems for generating synthetic aperture radar (SAR) video.

### Background

SAR is a type of imaging technology that can be used for a variety of applications such as Earth observation, mapping, object tracking, change detection (e.g., in arctic ice), natural catastrophe monitoring, and many others. SAR images are a type of image created by transmitting radar signals, receiving the reflected and scattered radar return signals, and processing the return signals in order to form the image. This is in contrast to optical imagery, a passive technology wherein images are captured by receiving light reflected or originating from an object. SAR technology, on the other hand, is an active rather than a passive technology since it relies on transmitting a radar signal instead of relying on sunlight or other light sources. A significant advantage of SAR technology over optical imagery is that SAR technology can image at night as well as through clouds and other adverse weather conditions. However, forming an image using SAR technology is generally more complex and generally requires significant signal processing of the returned echoes in order to generate the image.

More particularly, SAR images are acquired from a moving transceiver, such as a transceiver that comprises part of a satellite. In conventional radar, the spatial resolution of an image generated by measuring reflections of a radar signal is directly proportional to the bandwidth of the radar signal and inversely proportional to the dimensions of the antenna used to transmit and receive the radar signal. In other words, the larger the antenna, the finer the detail. This means that the length and height of the antenna that would be required to capture high-resolution images using conventional radar are often impractical, particularly for airborne use.

In contrast, SAR images are captured using a "synthetic aperture". A smaller and consequently more practical antenna is used on a moving platform to make a series of measurements of reflected radar signals, and those measurements are combined to simulate a much larger antenna. This is achieved by exploiting the Doppler effect created by the moving SAR platform. Consequently, the resolution of a SAR image corresponds to the resolution of a conventional radar image captured using an antenna much larger than the one used to capture the SAR image.

It is well-known to equip orbiting satellites with SAR technology, with the aim of capturing images of target locations on the Earth's surface. One problem with using an orbiting satellite to perform SAR imaging, however, is that the satellite can only discontinuously image the target location, since the satellite will only have line-of-sight to the target location for short periods of time during each orbit. It is also known to equip "High Altitude Platform Stations" (HAPS), also sometimes known as "High Altitude Pseudo Satellites", with SAR technology. HAPS are vehicles (such as balloons, blimps, or aircraft) designed to operate at high altitude within the Earth's atmosphere rather than in space. Unlike SAR satellites, SAR-equipped HAPS may circle above a given target location on the Earth's surface for long periods of time (such as days, weeks, or even months), allowing the HAPS to perform continuous monitoring of the target location using the HAPS's SAR payload.

However, due to particular characteristics of HAPS platforms compared to satellite platforms, for example such as the slower speed of HAPS compared to satellites, there may be significantly longer latency periods for obtaining SAR imagery.

### Summary

According to a first aspect of the disclosure, there is provided a method of generating a synthetic aperture radar (SAR) video, comprising: obtaining a first SAR video of a target location on the Earth's surface; obtaining a second SAR video of the target location; and generating, based on the first and second SAR videos, a third SAR video of the target location.

Generating the third SAR video may comprise generating the third SAR video based on one or more portions of the first SAR video and one or more portions of the second SAR video.

he one or more portions of the first SAR video may correspond to one or more static scenes, and the one or more portions of the second SAR video may correspond to one or more targets moving relative to the one or more static scenes.

The first SAR video may have a lower latency than the second SAR video.

The first SAR video may have a lower resolution that the second SAR video.

The first SAR video may have a lower latency than the second SAR video, the first SAR video may have a lower resolution than the second SAR video, and generating the third SAR video may comprise generating the third SAR video based on one or more portions of the first SAR video and one or more portions of the second SAR video.

The one or more portions of the first SAR video may correspond to one or more static scenes, the one or more portions of the second SAR video may correspond to one or more targets moving relative to the one or more static scenes, and generating the third SAR video may comprise generating the third SAR video by combining the one or more portions of the first SAR video that correspond to the one or more static scenes with the one or more portions of the second SAR video that correspond to the one or more targets moving relative to the one or more static scenes.

Obtaining the first SAR video may comprise generating the first SAR video by operating a SAR payload on a High-Altitude Platform Station (HAPS) flying over the target location. Obtaining the second SAR video may comprise generating the second SAR video by operating the SAR payload on the HAPS flying over the target location.

Generating the third SAR video may comprise: inputting the first and second SAR videos to a trained machine learning model; and generating, using the trained machine learning model, the third SAR video.

The third SAR video may have a latency of less than 1 minute.

According to a further aspect of the disclosure, there is provided a method of generating a synthetic aperture radar (SAR) video, comprising: flying an aircraft over a target location on the Earth's surface, wherein the aircraft has a SAR payload; during the flying, operating the SAR payload to generate SAR data of the target location; generating, based on the SAR data, a first SAR video and a second SAR video of the target location; and generating, based on the first and second SAR videos, a third SAR video of the target location.

The method may further comprise transmitting the SAR data from the aircraft to a processing station; and generating the first, second, and third SAR videos comprises generating the first, second, and third SAR videos at the processing station.

The aircraft may be an unmanned aircraft configured to operate at an altitude between 50,000 and 80,000 feet.

The first SAR video may have a lower latency and a lower resolution than the second SAR video.

The SAR payload may be configured to operate in the Kₐ band, and operating the SAR payload to generate the first and second SAR videos may comprise operating the SAR payload in the Kₐ band.

According to a further aspect of the disclosure, there is provided a processing station for processing synthetic aperture radar (SAR) data, comprising one or more computer processors communicative with one or more computer-readable media comprising computer program code configured, when executed by the one or more processors, to cause the one or more processors to: generate, from received SAR data, a first SAR video of a target location on the Earth's surface; generate, from the received SAR data, a second SAR video of the target location; and generate, based on the first and second SAR videos, a third SAR video of the target location.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 is a schematic diagram of an unmanned aircraft equipped with a SAR payload, according to an embodiment of the disclosure;
FIG. 2 is a top view of the unmanned aircraft of FIG. 1, according to an embodiment of the disclosure;
FIGS. 3A and 3B are respective cross-sectional and perspective views of a SAR payload according to an embodiment of the disclosure;
FIG. 4 is a diagram showing the unmanned aircraft of FIG. 1 performing SAR imaging, according to an embodiment of the disclosure;
FIG. 5 is a schematic diagram of hardware components on an unmanned aircraft being used to transmit SAR data to a processing station, according to an embodiment of the disclosure;
FIG. 6 is a flow diagram of a method of generating a SAR video, according to an embodiment of the disclosure;
FIG. 7 shows an example of a high-resolution SAR image of a target location, according to an embodiment of the disclosure;
FIG. 8 shows an example of a low-resolution SAR image of the target location, generated in a shorter amount of time relative to the image of FIG. 7, according to an embodiment of the disclosure;
FIG. 9 shows an example of a high-resolution SAR image of the target location, illustrating a train having entered the field of view, according to an embodiment of the disclosure;
FIG. 10 shows an example of a low-resolution SAR image of the target location, illustrating the train having moved in the field of view, according to an embodiment of the disclosure; and
FIG. 11 shows an example of a synthetic high-resolution SAR image of the target location, illustrating the train as seen in the image of FIG. 10, according to an embodiment of the disclosure.
FIG. 12 is a schematic diagram of hardware components used at a processing station to process SAR data, according to an embodiment of the disclosure.

### Description

The present disclosure seeks to provide novel methods and systems for generating a SAR video. While various embodiments of the disclosure are described below, the disclosure is not limited to these embodiments, and variations of these embodiments may well fall within the scope of the disclosure which is to be limited only by the appended claims.

Throughout this disclosure, reference is made to "SAR video" or "generating SAR video". A video is generally held to mean a sequence of two or more images, or video frames, and while typical video, such as what we may see on television, is generally understood to have a relatively high frame rate (and in particular a sufficiently high frame rate so as to give the impression of a fluidly moving image), in the context of the present disclosure "video" should be understood to mean a sequence of images that may, or may not, have a sufficiently high frame rate to exhibit a certain degree of fluidity. In particular, in the context of the present disclosure, it shall be understood that a SAR video includes a time sequence of consecutive SAR images that may or may not have a relatively long period of time between successive images, for example of the order of several seconds or more.

The frame rate depends on the latency, or the time it takes to collect and process any given SAR image before it becomes available. Objects in a SAR video with lower frame rates may not move fluidly but instead may appear to be moving "jerkily". Therefore, SAR video can be different from typical digital video that is generated, for example, for viewing on a user's display screen at home, such as a movie or a TV broadcast. SAR video according to this disclosure is not limited to video that is viewed or meant to be viewed at a real-time rate. The SAR video could be viewed or sequenced so that it is sped up, slowed down, or could contain a combination of sped-up and slowed-down sections.

It should also be understood that the length of the video may be quite short, for example comprising only two video frames, and is not limited in terms of its duration.

HAPS equipped with SAR technology may be useful for generating SAR video (i.e., a sequence of SAR images) of a target location. For example, it may be useful for the HAPS to continuously monitor a moving object, such as a marine vessel moving over water. However, since HAPS travel at lower speeds than an orbiting satellite, it can take some time for the HAPS to cover a sufficient distance that would enable a sequence of SAR images of acceptable resolution to be formed. SAR video generated by HAPS is therefore delayed by the time it takes to form the synthetic aperture for a given acceptable resolution. On a relatively slow-flying aircraft, the delay for a relatively high-resolution image may be 2-4 minutes. During this time, the target may have moved, reducing the usefulness of the video. Likewise, if a HAPS is used to generate a sequence of SAR images (a SAR video) in a shorter period of time, with the goal of reducing the latency of the video, then the resolution of the video will suffer as a result, and again the usefulness of the video will be compromised.

As described above, in aerial SAR imaging there is a trade-off between video latency and resolution. Intelligently processing SAR images can allow for a SAR video to be generated based on multiple other SAR videos. The SAR video that is generated as a result can benefit from both relatively low-latency and acceptable (e.g., high) resolution.

According to embodiments of the disclosure, a method of generating a SAR video includes obtaining a first SAR video of a target location on the Earth's surface, obtaining a second SAR video of the target location, and generating, based on the first and second SAR videos, a third SAR video of the target location. The first SAR video may have a lower latency and a lower resolution than the second SAR video. Generating the third SAR video may therefore include generating the third SAR video based on a portion of the first SAR video corresponding to a static scene, and a portion of the second SAR video corresponding to a target moving relative to the static scene.

The first SAR video may comprise a low-latency but low-resolution video of the target location, whereas the second SAR video may comprise a highlatency but high-resolution video of the target location. A static scene generally does not change over a certain period of time, whereas a specific target set against the backdrop of the static scene may move within the same timeframe. Therefore, one or more portions of the first and second SAR videos may be merged or otherwise combined (e.g., using any of various image processing techniques) to form a low-latency, high-resolution SAR video of the target location. In particular, the high-resolution portion of the moving target from the first SAR video can be merged or otherwise combined with the low-latency portion of the static scene from the second SAR video to form the third SAR video. The third SAR video therefore shows high-resolution video of the moving target while suffering from only relatively low latency.

Various methods that may or may not yet be known in the art may be used to process the first and second SAR videos to extract the relevant portions of the SAR videos and combine them to form the third SAR video. For example, machine learning and continuous image processing may be used to generate the third SAR video which may have a latency of no more than 1 minute while still benefitting from a high resolution (such as, for example, a resolution of 1 metre or less, or 0.5 metres or less).

The resolution will depend on the speed of the aircraft, the size of the antenna, and the operating frequency of the antenna. Azimuth resolution, which is the resolution in the direction of movement of the aircraft, depends in particular on the speed of the aircraft and the synthetic aperture length of the antenna, whereas range resolution (resolution in a direction perpendicular to the aircraft's movement) depends on the antenna design and the frequency or bandwidth of the SAR signal. In this disclosure, resolution generally means azimuth resolution, because the azimuth resolution and thus the latency of the SAR video as a function of resolution is related to how fast the SAR system is moving.

For example, when operating with X-band SAR, a high resolution may be 1 m or less and a low resolution may be 5 m or greater. However, many examples with different high and low resolutions are possible. For example, when operating in the Kₐ-band, a high resolution may be 25 cm or less, or 50 cm or less, and a low resolution may be 2 metres or more. Regardless of the actual numbers, a common feature of the example SAR images described as having one or more low-resolution image portions combined with one or more high-resolution image portions which have, for example, four to ten times the resolution of the one or more low-resolution image portions is that it may take, for example, four to ten times correspondingly longer to form.

Therefore, according to some embodiments, two separate and simultaneous SAR videos are processed. One of the SAR videos has a low azimuth resolution since it is being generated with a smaller synthetic aperture but therefore suffers from less latency. The second SAR video has a higher azimuth resolution since it is being generated with a larger synthetic aperture but therefore suffers from more latency. The majority of targets being imaged by airborne SAR platforms are stationary and can therefore be imaged with a high resolution. Once a target begins to move, the movement will not be detected for multiple minutes on the high-resolution SAR video but will be visible on the low-resolution SAR video sooner.

However, it may be difficult to determine exactly what is moving in the low-resolution SAR video. Therefore, by combining the movement detection on the low-resolution SAR video with the high-resolution video of the target from the high-resolution SAR video, it is possible to overlay the high-resolution video of the now-moving target onto the more real-time low-resolution SAR video. The operator of the SAR may therefore react more quickly and may respond for quickly to the moving target. Although this technique may be used for tracking and monitoring any moving target, it is particularly beneficial for tracking and monitoring faster-moving targets such as fast boats, vehicles, or aircraft.

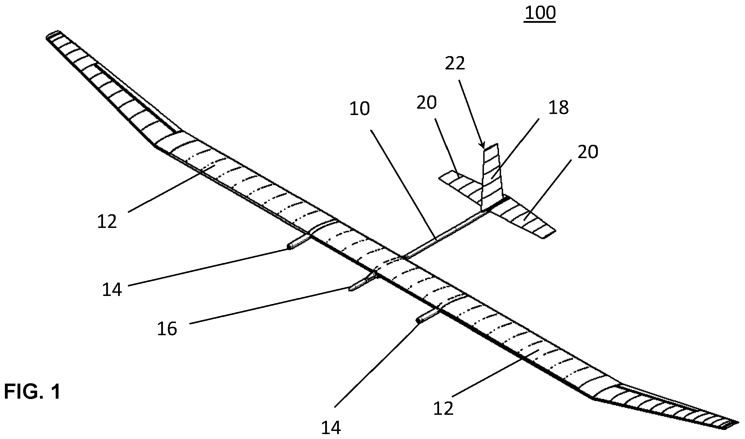

Turning now to FIG. 1, there is shown a perspective view of a high-altitude, unmanned aircraft 100 according to an embodiment of the disclosure.

Aircraft 100 includes a fuselage 10, wings 12 connected to fuselage 10, and a tail 22 connected to a rear of fuselage 10. Tail 22 includes a pair of horizontal stabilizers 20 comprising an elevator (not shown) for controlling a pitch of aircraft 100, as well as a vertical stabilizer 18 comprising a rudder (not shown) for controlling a yaw of aircraft 100.

Thrust is provided by a pair of electrically-powered propellers 14 connected to wings 12 (in the drawings, only nacelles are shown, but the skilled person will understand that propellers will be secured to the nacelles in order to provide thrust). At a front of aircraft 100 is located the nose of aircraft 100. Inside the nose is housed a SAR payload 16 comprising a SAR radar for performing SAR imaging of a target location on the Earth's surface as aircraft 100 is in flight. According to some embodiments, SAR payload 16 may be housed in a different location on aircraft 100 or distributed across multiple locations on aircraft 100.

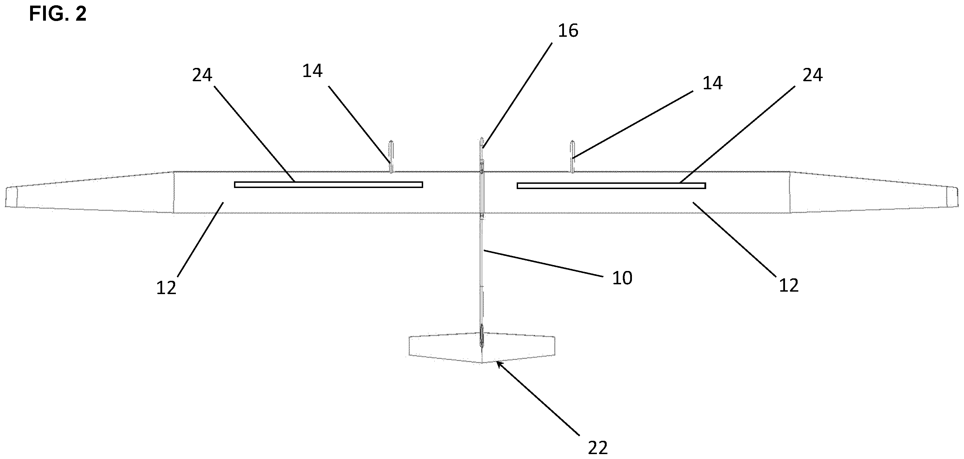

Turning to FIG. 2, there is shown a top view of aircraft 100. A pair of banks of batteries 24 (such as lithium-ion batteries) are provided within wings 12.

Locating batteries 24 in wings 12 can help to reduce weight by locating the relatively heavy battery components close to lifting surfaces of aircraft 100, thereby lessening the requirements on the structure of aircraft 100. According to some embodiments, batteries 24 may be stored in another location on aircraft 100, such as in the nacelles. Batteries 24 store electrical energy generated by solar cells. According to some embodiments, the solar cells may be positioned on the exterior surface of wings 12, or on the exterior surface of some other portion of aircraft 100. The solar cells may also be located on other structures of aircraft 100. For example, the solar cells may be located so as to maximize vertical surface coverage to extend energy production at sunrise and sunset. For example, one or more portions of tail 22 of aircraft 100, such as vertical stabilizer 18, may be provided with solar cells as described above. Other vertical surfaces of aircraft 100 that may be fitted with solar cells include, for example, fuselage 10 (e.g., vertical portions of the fuselage 10) and any vertical winglets at the end of wings 12. According to some embodiments, the solar cells may be located inside wings 12, and the exterior surface of wings 12 may be transparent to allow sunlight to reach the solar cells.

Electrical energy from batteries 24 may be used to power propellers 14, SAR payload 16, and other components of aircraft 100 such as a wireless communication module (not shown) that is used to receive and transmit wireless communications sent by ground stations and/or by orbiting satellites to and from aircraft 100. Batteries containing lithium such as lithium-ion batteries are advantageous because they can store a lot of energy for a given weight. In alternative embodiments, other types of batteries with similarly high specific energy, or gravimetric energy density (Wh/kg), could also be used.

The wireless communication module may allow for a fleet of orbiting satellites to relay instructions to aircraft 100 from a control station on the ground in case aircraft 100 is not within direct communication range of a ground station. Data captured by SAR payload 16 may additionally be downloaded to the control station via the orbiting satellites. The control station may additionally centrally control multiple such unmanned aircraft. Furthermore, since line-of-sight is not required to control aircraft 100, there is effectively no limit to where aircraft 100 can fly once airborne. In addition, relaying communications via orbiting satellites may allow for more secure communications with aircraft 100, reducing the likelihood of communications link losses due to interferences or jamming.

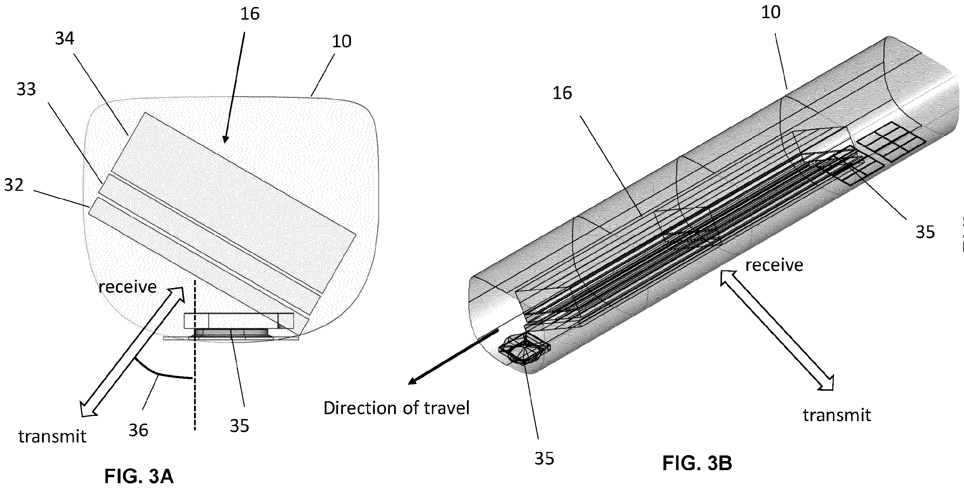

FIGS. 3A and 3B illustrate SAR payload 16 in greater detail. As can be seen in FIG. 3A, SAR payload 16 includes a phased-array transceiver antenna 32, power amplifiers 34, and RF connections 33 for transferring power from power amplifiers 34 to phased-array antenna 32. According to this embodiment, SAR payload 16 is housed within fuselage 10 (in particular, the nose of aircraft 100). A SAR radar as used for Earth observation applications is typically side-looking. In other words, it does not look straight down as might be the case with other technologies such as optical imaging. This is because the specular radar reflection from the nadir (the area directly underneath the SAR platform) would be too bright to form a good image. As such, SAR is performed by sending radar pulses to the side at a certain "look angle" which is the angle between a line pointing straight down from the radar to the Earth and the direction in which the antenna is pointing. A look angle 36 is indicated in FIG. 3A. In an example, the look angle is greater than 10°, and could be between 10° and 80°. In FIGS. 3A and 3B, adjustable payload mounts 35 are used to adjust look angle 36 of SAR radar waves emitted by phased-array antenna 32. In an example, look angle 36 can be adjusted manually, or automatically through the use of a motor or other mechanism. In an example, look angle 36 is automatically adjustable during flight through commands from the ground or from a pre-programmed mission. Payload mounts 35 may also be vibrationally isolated from fuselage 10. According to some embodiments, the SAR radar is configured to emit radar waves in the X band, for example waves in the 8 - 12 GHz range. According to other embodiments, the SAR radar may be configured to emit radar waves in the Kₐ band, for example waves in the 26.5 - 40 GHz range, or waves in the 33.4 - 36 GHz range (depending on regulations). Other bands such as K, C, S, L, and P bands can also be used for SAR imaging.

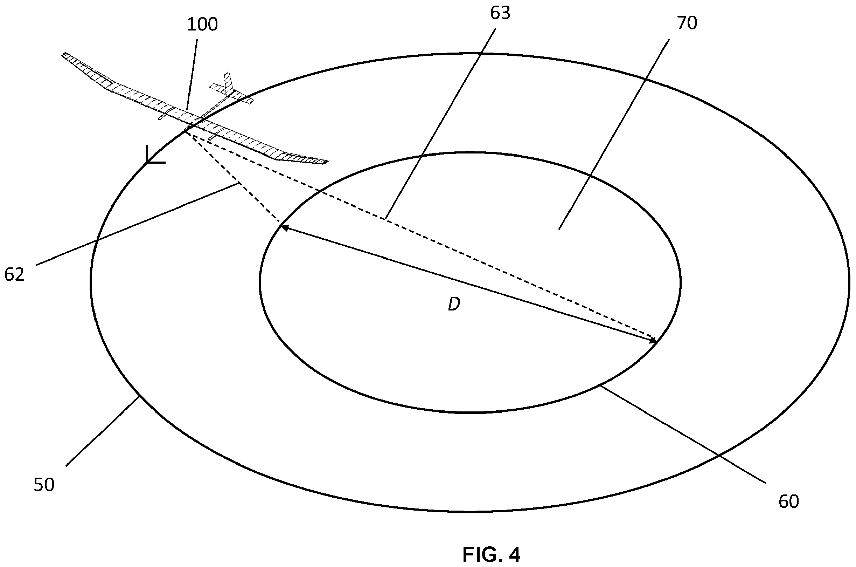

Turning to FIG. 4, there is shown an example of unmanned aircraft 100 circling, via a flight path 50, a target location 70 on the Earth's surface. When operating SAR payload 16 to perform imaging of target location 70, radar waves emitted by the SAR radar of SAR payload 16 define a spotlight 60 that encompasses target location 70 as aircraft 100 circles overhead. According to some embodiments, the width of spotlight 60 may range from 5-30 km. In FIG. 4, the spotlight area is shown as circular, but it is understood that other flight patterns (such as flying in squares) to monitor a target location are also possible. As can be seen in FIG. 4, the radar beam is emanating out from the antenna of SAR payload 16 in the front of aircraft 100 in a direction approximately perpendicular to the direction of motion of aircraft 100 and looking to the side at a certain look angle. In some examples, the phased array radar may also comprise some electronic steering that allows the radar beam to be steered slightly forwards and backwards, for example by +/- 2°, or by +/- 10° from directly perpendicular.

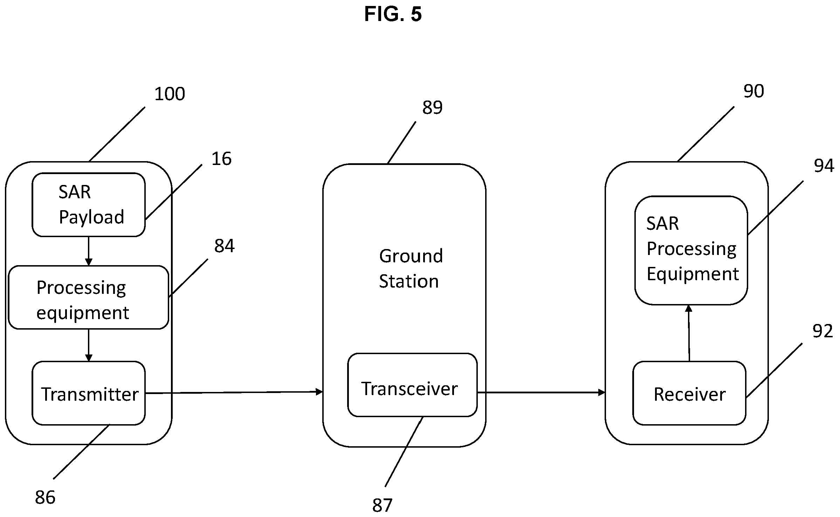

Turning to FIG. 5, there is shown a schematic diagram of hardware components onboard aircraft 100 being used to allow aircraft 100 to communicate with a processing station 90 on the Earth's surface. Processing station 90 houses the computer hardware components that are used to process the SAR data and generate the synthetic SAR video, as described in further detail below. Typically, aircraft 100 will first downlink the SAR data to a ground station 89, and ground station 89 will relay (using a wired or wireless communication link) the downlinked SAR data to processing station 90. However, it is possible, according to some embodiments, for ground station 89 to process the SAR data, in which case ground station 89 effectively performs the function of processing station 90.

Aircraft 100 includes SAR payload 16, aircraft processing equipment 84, and a transmitter 86. Meanwhile, processing station 90 includes a receiver 92 and SAR processing equipment 94. Aircraft processing equipment 84 and SAR processing equipment 94 comprise suitable computer processors, comprising circuitry, and computer-readable media configured to perform various functions as described herein. Ground station 89 includes a transceiver 87 (or a separate transmitter and receiver) for relaying the SAR data from aircraft 100 to processing station 90. For example, relaying the SAR data from ground station 89 to processing station 90 could be performed through a wired or wireless terrestrial network. According to some embodiments, if aircraft 100 is not in direct communication with ground station 89, the SAR data can be relayed to ground station 89 via a satellite or another aircraft.

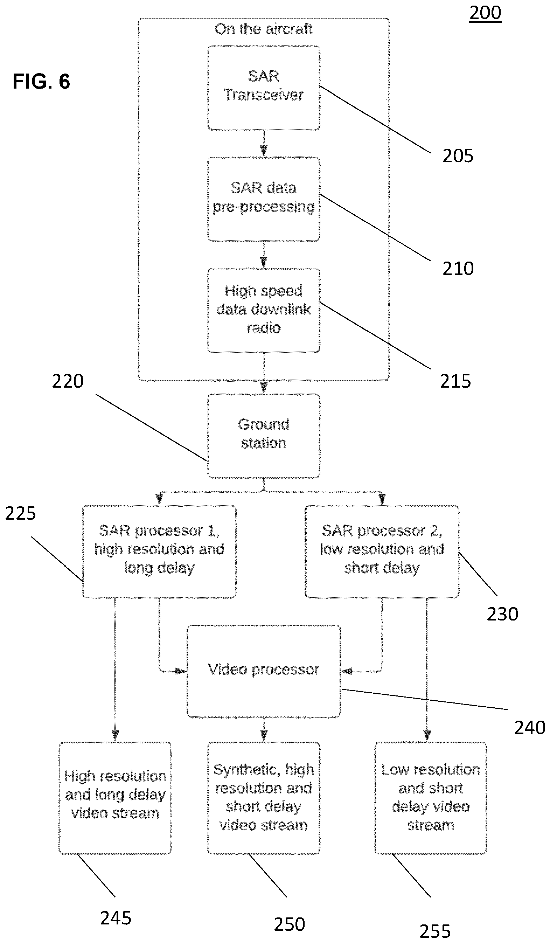

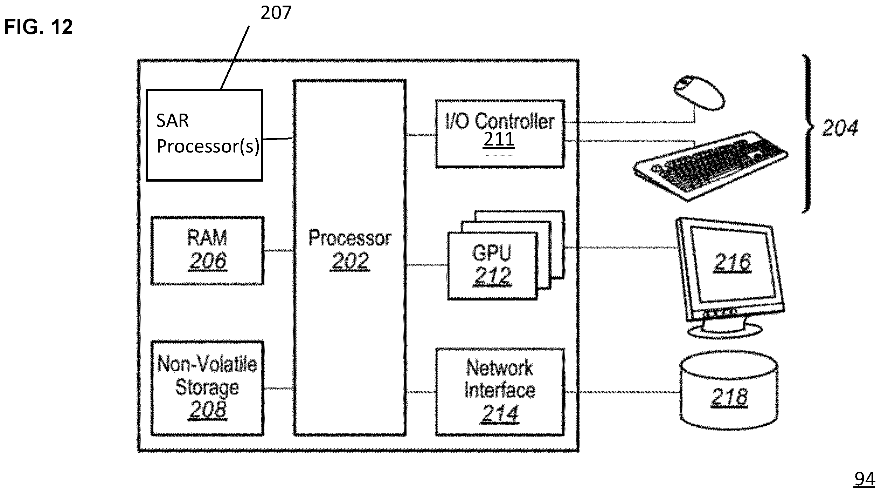

During operation, data captured by SAR payload 16 is passed to aircraft processing equipment 84 for pre-processing (which may include, for example, basic compression/encoding/packaging). Following pre-processing, the pre-processed data is passed to transmitter 86 which transmits or otherwise downloads the data to transceiver 87 of ground station 89. Transceiver 87 of ground station 89 then relays the SAR data to receiver 92 of processing station 90. Receiver 92 passes the data to SAR processing equipment 94 which processes the data as described in more detail below in connection with FIG. 6 (an example of hardware components in SAR processing equipment 94 is shown in FIG. 12). In particular, as described in further detail below in connection with FIG. 6, SAR processing equipment 94 includes a at least a pair of image processors configured to generate two separate streams of SAR video based on the SAR data that is received at processing station 90. SAR processing equipment 94 further includes at least one video processor configured to receive the separate streams of SAR video (i.e., first and second SAR video streams) and generate, based on the first and second SAR video streams, a third, synthetic stream of SAR video by combining elements of the first and second SAR video streams.

Turning to FIG. 6, there is shown a flow diagram of a method of generating a SAR video by processing two separate SAR videos, according to an embodiment of the disclosure.

At block 205, onboard aircraft 100, a SAR transceiver comprised in SAR payload 16 receives SAR data obtained by the operation of the SAR radar. The SAR data is transmitted to processing equipment 84 for pre-processing.

At block 210, the SAR data received at processing equipment 84 is pre-processed, as described above.

At block 215, the pre-processed data is passed to a high-speed data downlink transmitter (e.g., transmitter 86 in FIG. 5), and the SAR data is transmitted to ground station 89. Ground station 89 relays the SAR data to processing station 90 (not shown in FIG. 6).

At block 220, receiver 92 of processing station 90 receives the SAR data.

The SAR data is passed to SAR processing equipment 94 of processing station 90. More particularly, the SAR data is passed to a first SAR processor ("SAR processor 1"; block 225) and to a second SAR processor ("SAR processor 2"; block 230). SAR processor 1 is configured to process the SAR data to generate relatively high-resolution SAR images (e.g., with a resolution less than 1 metre) that are used in turn for a relatively high-resolution SAR video stream (block 245). Because of the required high resolution of the video stream output by SAR processor 1, the latency of the SAR video output by SAR processor 1 is relatively high. In other words, there is a relatively long delay between when the aircraft starts to capture the information and when the corresponding images become available in the video stream. This then translates into a certain amount of time (i.e., higher frame rate) between successive images in the video stream. In the context of a HAPS moving with a ground speed of about 100 km/h, the latency may be 15-30 seconds, for example, or it could be 2 minutes or more, depending on the speed of the aircraft and the antenna design. These latencies may be higher for slow-moving airships and lower for relatively faster aircraft.

In contrast, SAR processor 2 is configured to process the SAR data to generate relatively low-resolution SAR images (e.g. with a resolution of at least 5 metres) that are used in turn for a relatively low-resolution SAR video stream (block 255). Because of the low-resolution requirement of the video stream output by SAR processor 1, the latency of the SAR video output by SAR processor 1 is relatively low. In other words, there is a relatively short delay between when the aircraft starts to capture the information and when the corresponding image becomes available in the video stream. This then translates into a lower amount of time (e.g., a higher frame rate) between successive images in the video stream.

While the embodiment shown in FIG. 6 uses two separate processors to process the SAR data, according to other embodiments a single processor may process the SAR data in parallel or in series. More generally, any number of suitable processors may be used.

At block 240, the video streams generated by SAR processor 1 and SAR processor 2 are passed to a video processor configured to process the two video streams to generate a third video stream. In particular, the video processor is configured to generate a SAR video stream that both has a relatively low latency and that is relatively high-resolution. For example, according to some embodiments, the video processor may be configured to execute one or more machine learning models that receive as input the video streams output by SAR processor 1 and SAR processor 2. The one or more machine learning models may be trained to identify, within the video stream output by SAR processor 1, one or more targets (such as one or more moving objects) in the SAR video stream, as well as well as any static scenes (e.g., background) in the video. The one or more machine learning models may be further trained to then overlay or otherwise combine these high-resolution portions of the video stream output by SAR processor 1 with the low-latency SAR video stream output by SAR processor 2. The resulting "synthetic" SAR video stream that is generated (block 250) and output by the video processor therefore comprises these high-resolution portions while also experiencing relatively low latency.

Although the use of machine learning is described herein, the disclosure extends to alternative embodiments that do not require machine learning and, for example, simply use pre-programmed video processors (or video editing techniques known in the art) to detect moving objects and to appropriately combine the low-resolution and high-resolution video streams to generate a low-latency sequence of high-resolution SAR images.

More particularly, a low-resolution video stream may be enhanced by replacing the low-resolution stationary/static background data with the high-resolution background data from the high-resolution video stream. Additionally, if one or more elements or objects in the high-resolution video stream (such as a car, ship, or aircraft) have moved, then each such element or object may be taken from the high-resolution video stream and moved to a more updated (e.g., more real-time) position in the low-resolution video stream. If any such element or object has entered the imaged area in the low-resolution video stream but has not yet done so in the high-resolution video stream, then any such element or object may remain low-resolution in the synthetic SAR video stream, since a corresponding high-resolution element or object has not yet been generated to be used as a replacement.

SAR processors typically convert the raw SAR data (radar echoes) into SAR images that have an amplitude component and a phase component. In some examples, only the amplitude component of the SAR images is used to form the high- and low-resolution video streams that go into video processor 240. In this way, the amplitude SAR images are similar to any other video image, and standard video processors can be used to combine the high- and low-resolution video streams to create the synthetic video stream. In other examples, it may be possible to form a synthetic video stream comprising both the amplitude and phase information from the original SAR video streams.

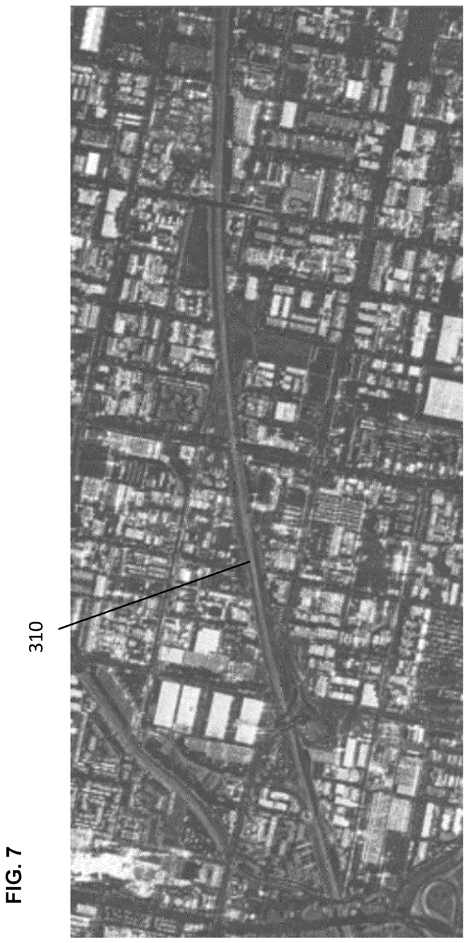

Turning to FIGS. 7-11, there are shown various example SAR images based on the amplitude of the SAR radar returns that are processed according to the method described herein. In this example, let us assume that SAR processor 1 is able to process a video stream with a latency of 1 minute between images, whereas SAR processor 2 is able to process a video stream with a latency of 20 seconds between images. The actual latency will depend on the speed of the moving SAR platform as well as the operating frequency of the SAR radar.

Starting with FIG. 7 which shows a baseline image at t=0, there is shown a high-resolution image of a target location on the Earth's surface. In this example, the SAR image shows an urban environment with train tracks 310 extending between a left-hand side of the image and a right-hand side of the image. FIG. 7 is an example image that may be included in the video stream output by SAR processor 1.

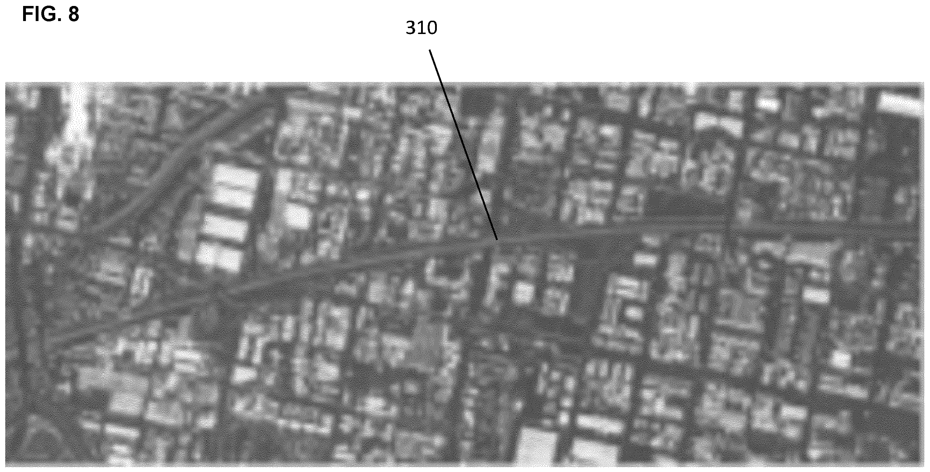

FIG. 8 shows a low-resolution image of the same target location on the Earth's surface. The image shown in FIG. 8 was generated more quickly, and therefore over a smaller distance travelled by the SAR platform, which is why the resolution is lower. FIG. 8 is an example image that may be included in the video stream output by SAR processor 2.

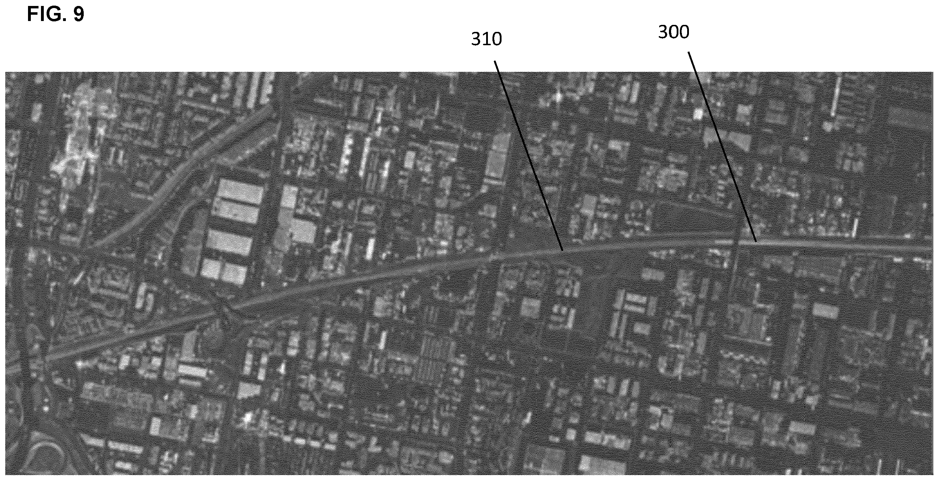

FIG. 9 shows a high-resolution image of the same target location on the Earth's surface, this time with a train 300 having entered the field of view. FIG. 8 is an example image that may be included in the video stream output by SAR processor 1. The image shown in FIG. 9 is delayed relative to the image shown in FIG. 7 by 1 minute, since SAR processor 1 is able to process its video stream with a latency of 1 minute between images.

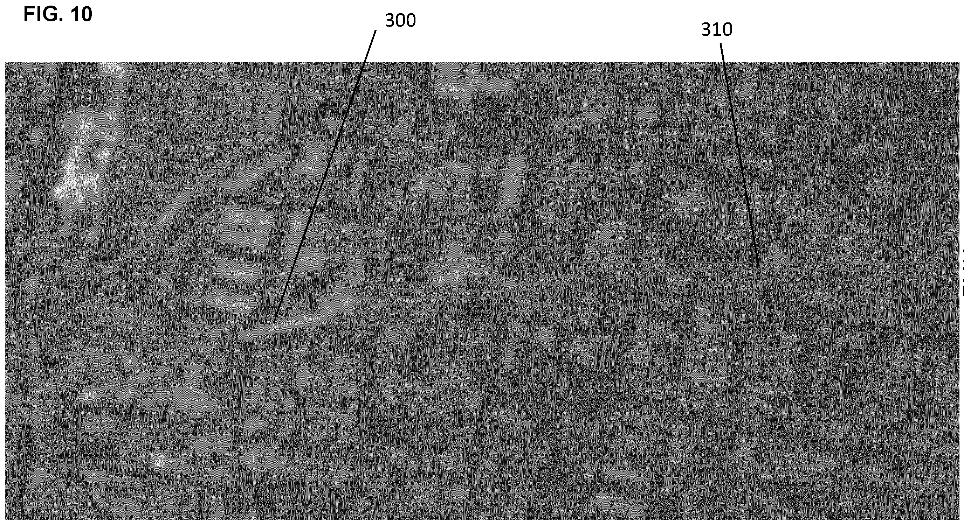

FIG. 10 shows a low-resolution image of the same target location on the Earth's surface. FIG. 10 is an example image that may be included in the video stream output by SAR processor 2. The image shown in FIG. 10 is delayed relative to the image shown in FIG. 9 by 20 seconds, since SAR processor 2 is able to process its video stream with a latency of 20 seconds between images. As can be seen, train 300 is now seen near the left-hand side of the image. If SAR processor 1 were used to generate a high-resolution image corresponding to the scene shown in FIG. 10, then train 300 would not be captured because another 40 seconds would have elapsed and train 300 would have exited the scene via the left-hand side of the image.

Therefore, in order to generate a high-resolution image corresponding to the scene in FIG. 10, both video streams output by SAR processors 1 and 2 are used and processed by the video processor (block 240 in FIG. 6), as described above.

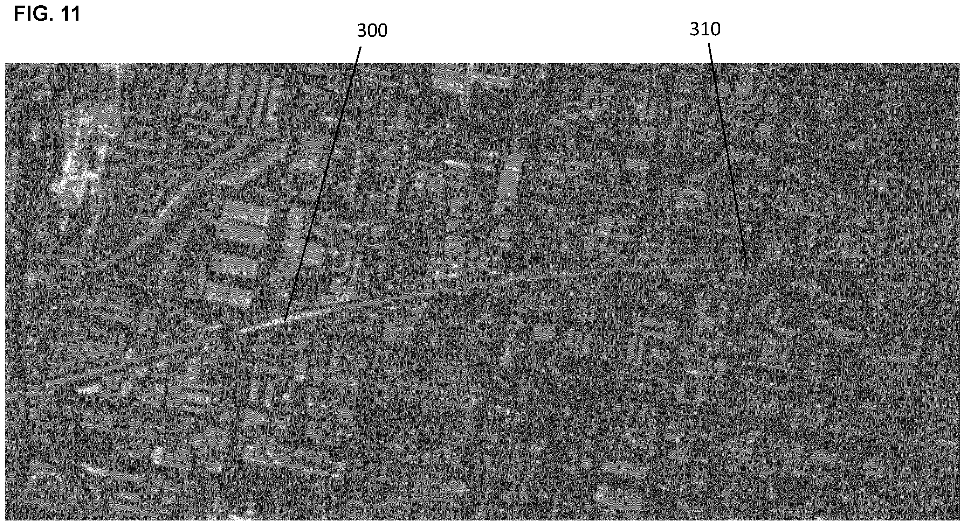

The output of the video processor can be seen in FIG. 11. FIG. 11 shows a high-resolution image corresponding to the low-resolution image shown FIG. 10, using high-resolution data obtained from the image in FIG. 9. As can be seen, train 300 and the static background are now shown in high-resolution. In other words, the synthetic image seen in FIG. 11 is generated by taking the high-resolution data in FIG. 9 and combining it with the low-latency data in FIG. 10. In particular, the high-resolution background from the image in FIG. 9 is overlaid on the low-resolution background from the image in FIG. 10, and the high-resolution train from the image in FIG.9 is overlaid on the low-resolution train from the image in FIG. 10.

Referring to FIG. 12, there is shown a schematic diagram of example hardware components that may make up SAR processing equipment 94 of processing station 90. A computer processor 202 controls the overall operation of the hardware components. Processor 202 is communicatively coupled to and controls several subsystems. These subsystems comprise an input/output ("I/O") controller 211, which is communicatively coupled to user input devices 204. User input devices 204 may comprise, for example, any one or more of a keyboard, mouse, touch screen, and microphone. The subsystems further comprise random access memory ("RAM") 206 which stores computer program code for execution at runtime by processor 202; non-volatile storage 208 which stores the computer program code executed by RAM 206 at runtime; graphical processing units ("GPU") 212 which control a display 216; and a network interface 214 which facilitates network communications with a database 218. Non-volatile storage 208 has stored on it computer program code that is loaded into RAM 206 at runtime and that is executable by processor 202. Processor 202 further controls SAR processor(s) which may include, for example, one or more processors for processing the first and second SAR video streams at blocks 225 and 230 of FIG. 6, as well as a video processor for combining the processed streams into the final, synthetic video stream (block 240 in FIG. 6). When the computer program code is executed by processor 202, processor 202 causes SAR processor(s) 207 to implement any of the various methods of generating SAR images, as described herein.

Throughout this disclosures, use of language such as "at least one of X, Y, and Z," "at least one of X, Y, or Z," "at least one or more of X, Y, and Z," "at least one or more of X, Y, and/or Z," or "at least one of X, Y, and/or Z," are intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A method of generating a synthetic aperture radar (SAR) video, comprising:
obtaining a first SAR video of a target location on the Earth's surface;
obtaining a second SAR video of the target location; and
generating, based on the first and second SAR videos, a third SAR video of the target location.

2. The method of claim 1, wherein generating the third SAR video comprises generating the third SAR video based on one or more portions of the first SAR video and one or more portions of the second SAR video.

3. The method of claim 2, wherein the one or more portions of the first SAR video corresponds to one or more static scenes, and wherein the one or more portions of the second SAR video correspond to one or more targets moving relative to the one or more static scenes.

4. The method of any one of claims 1-3, wherein the first SAR video has a lower latency than the second SAR video.

5. The method of any one of claims 1-4, wherein the first SAR video has a lower resolution that the second SAR video.

6. The method of any one of claims 1-5, wherein:
the first SAR video has a lower latency than the second SAR video;
the first SAR video has a lower resolution than the second SAR video; and
generating the third SAR video comprises generating the third SAR video based on one or more portions of the first SAR video and one or more portions of the second SAR video.

7. The method of claim 6, wherein the one or more portions of the first SAR video correspond to one or more static scenes, wherein the one or more portions of the second SAR video correspond to one or more targets moving relative to the one or more static scenes, and wherein generating the third SAR video comprises generating the third SAR video by combining the one or more portions of the first SAR video that correspond to the one or more static scenes with the one or more portions of the second SAR video that correspond to the one or more targets moving relative to the one or more static scenes.

8. The method of any one of claims 1-7, wherein:
obtaining the first SAR video comprises generating the first SAR video by operating a SAR payload on a High-Altitude Platform Station (HAPS) flying over the target location; and
obtaining the second SAR video comprises generating the second SAR video by operating the SAR payload on the HAPS flying over the target location.

9. The method of any one of claims 1-8, wherein generating the third SAR video comprises:
inputting the first and second SAR videos to a trained machine learning model; and
generating, using the trained machine learning model, the third SAR video.

10. The method of any one of claims 1-9, wherein the third SAR video has a latency of less than 1 minute.

11. A method of generating a synthetic aperture radar (SAR) video, comprising:
flying an aircraft over a target location on the Earth's surface, wherein the aircraft has a SAR payload;
during the flying, operating the SAR payload to generate SAR data of the target location;
generating, based on the SAR data, a first SAR video and a second SAR video of the target location; and
generating, based on the first and second SAR videos, a third SAR video of the target location.

12. The method of claim 11, wherein:
the method further comprises transmitting the SAR data from the aircraft to a processing station; and
generating the first, second, and third SAR videos comprises generating the first, second, and third SAR videos at the processing station.

13. The method of claim 11 or 12, wherein the aircraft is an unmanned aircraft configured to operate at an altitude between 50,000 and 80,000 feet.

14. The method of any one of claims 11-13, wherein the first SAR video has a lower latency and a lower resolution than the second SAR video.

15. A processing station for processing synthetic aperture radar (SAR) data, comprising one or more computer processors communicative with one or more computer-readable media comprising computer program code configured, when executed by the one or more processors, to cause the one or more processors to:
generate, from received SAR data, a first SAR video of a target location on the Earth's surface;
generate, from the received SAR data, a second SAR video of the target location; and
generate, based on the first and second SAR videos, a third SAR video of the target location.
